# EUROPEAN PATENT SPECIFICATION

(11) **EP 1 665 937 B1**
(45) Date of publication and mention of the grant of the patent: **20.02.2008**
(21) Application number: 04773080.9
(22) Date of filing: 15.09.2004
(51) Int. Cl.: A23C 9/154, A23L 1/24, A23L 1/39

(54) **OIL-IN-WATER EMULSIFIED COMPOSITION**
EMULGIERTE ÖL-IN-WASSER-ZUSAMMENSETZUNG
COMPOSITION EMULSIFIEE HUILE/EAU

(30) Priority: 16.09.2003 JP 2003322727
(43) Date of publication of application: 07.06.2006
(73) Proprietor: Fuji Oil Company, Ltd., Osaka-shi, Osaka 542-0086 (JP)
(72) Inventor: TAKAHASHI, Taro, Fuji Oil Company, Limited, Izumisano-shi Osaka 598-8540 (JP); TOBE, Junko, Fuji Oil Company, Limited, Tsukuba-gun, Ibaraki 300-2436 (JP)
(74) Representative: Manaton, Ross Timothy
(86) International application number: PCT/JP2004/013407
(87) International publication number: WO 2005/027648

(56) References cited:
- EP-A1- 1 378 178
- WO-A1-93/25302
- JP-A- 3 236 759
- JP-A- 6 121 922
- JP-A- 7 184 564
- JP-A- 2001 046 851
- JP-A- 2004 201 672
- US-A1- 5 700 397
- NAKAMURA A ET AL: "COMPETITIVE ADSORPTION OF SOY SOLUBLE POLYSACCHARIDES IN OIL-IN-WATER EMULSIONS" FOOD RESEARCH INTERNATIONAL, ELSEVIER APPLIED SCIENCE, BARKING, GB, vol. 37, no. 8, 2004, pages 823-831, XP009080724 ISSN: 0963-9969

## Description

### Technical Field

The present invention relates to an edible emulsified composition, and particularly to an oil-in-water emulsified composition which has the body, savour and mellowness of fats and oils while avoiding greasiness and exhibiting a clear, fresh flavor. More specifically, the invention relates to an oil-in-water emulsified composition which contains soybean-derived water-soluble polysaccharides as active ingredients to achieve a stable emulsified dispersion, despite a relatively large particle size of 5-100 µm as the median diameters of the emulsified particles.

### Background Art

Edible emulsions, of which examples include food products such as dressings, gravies, extracts, soups, creams, custards and the like, have conventionally been produced as oil-in-water emulsified compositions by addition of fats and oils in order to impart food product properties and flavors such as body, savour and mellowness.

However, in completely emulsified oil-in-water emulsified compositions having emulsifiers and lactoproteins added to avoid separation of oils, such as in coffee cream, for example, the emulsified state is stable but the median diameter of the emulsified particles is usually no greater than 2 µm, yielding an unsatisfying taste that lacks oil body. On the other hand, stabilizers such as starch and xanthan gum are used in addition to egg and egg yolk in dressings that have seen a rapid increase in demand with the rising demand in recent years for delicatessen foods such as salads and pastas. Still, dressings prepared by addition of stabilizers such as starch and xanthan gum are stabilized in an emulsified state by increasing the viscosity of the aqueous phase, and because oil droplets remain as a result of incomplete emulsification, an excessively strong oily feel and acidic taste are noticeable and the undesirable flavor, indefinite taste and viscosity from the stabilizer produces an inferior overall taste. On the other hand, emulsions such as mayonnaise that employ egg and egg yolk have relatively large median emulsion particle sizes of 2-5 µm, and although an oily body is exhibited, stabilization requires the use of large amount of oils which runs counter to modern ideas of healthy consumption, while egg and egg yolk also abundantly contain cholesterol which, likewise, runs counter to ideas of healthy consumption.

As mentioned above, conventional oil-in-water emulsified compositions have uniform, micronized oil droplet particle sizes and are stable over time, but either exhibit bland or indistinct, featureless flavors or have inferior taste due to the indefinite flavor or viscosity of the emulsifiers or stabilizers, while in many cases a greasy texture is merely produced without accentuation of the nuanced flavors and deep savours, and therefore improvement has been desired in this regard.

As strategies for improvement there have been proposed a method of stabilizing emulsions with beef extract protein components (Patent document 1), a method of using acidic fermented milk (Patent document 2) and a method of using emulsifiers (Patent document 3), but these have not been sufficient for adequately bringing out emulsion stability and savour.

The present inventors have also already filed a patent application for an oil-in-water emulsified composition that employs water-soybean-derived soluble polysaccharides (Patent document 4), but it is concerned with achieving a stable emulsion by reducing the emulsified particle sizes in order to achieve emulsified particles with a median diameter of no greater than 5 µm. There has, incidentally, also been proposed an emulsion employing an emulsifier that produces a large emulsified particle size for addition to fried rice, but the emulsion has reduced oily components for a lower degree of oiliness (Patent document 5).

Patent document 1: Japanese Unexamined Patent Publication No. 2000-157199
Patent document 2: Japanese Unexamined Patent Publication No. 11-146769
Patent document 3: Japanese Unexamined Patent Publication No. 10-113145
Patent document 4: Japanese Unexamined Patent Publication No. 6-121922
Patent document 5: Japanese Unexamined Patent Publication No. 2003-009807

### Disclosure of the Invention

### Problems to be Solved by the Invention

Because conventional oil-in-water emulsified compositions achieve stabilization of their emulsified states by having fine, uniform emulsified particles with sizes of no greater than 5 µm, their flavors are characteristically bland and indistinct, whereas when the emulsified particle sizes are increased the indefinite taste or viscosity of the emulsifier or stabilizer used for stabilization becomes incorporated and impairs the taste, resulting in mere greasiness instead of a lack of accentuation of the nuanced flavors and deep savours, while long-term stabilization is also often not achieved. It is therefore an object of the present invention to provide a stable edible emulsified composition which exhibits the savoury body of oily components without excessively strong greasiness and a satisfactorily distinct taste.

### Means for Solving the Problems

As a result of much diligent research on the problems described above, the present inventors learned, surprisingly, that by using soybean-derived water-soluble polysaccharides to achieve a median emulsified particle size of 5-100 µm, it is possible to achieve the savour, body and mellowness of oil components while also obtaining stability with time. The present invention has been accomplished on the basis of this learned knowledge.

Specifically, the present invention provides an oil-in-water emulsified composition comprising soybean-derived water-soluble polysaccharides as active ingredients, with an emulsified particle median diameter adjusted to 5-100 µm, wherein the soybean-derived water-soluble polysaccharides are heat extracted from soybean or processed soybean product at a temperature of 100°C or higher and at a lower pH than the isoelectric point of soybean protein, the pH of extraction being in the acidic range of pH 2.4-4.0. The obtained emulsified composition is an oil-in-water emulsified composition characterized by comprising at least 5% edible fats and oils.

### Effect of the Invention

The oil-in-water emulsified composition of the invention uses soybean-derived water-soluble polysaccharides to allow stabilization of the emulsion with a large emulsified median particle size of 5-100 µm which has been problematic in the prior art, and as a result emulsified food products can be obtained having the flavor, body, mellowness and nuanced flavors of fats and oils.

### Best Mode for Carrying Out the Invention

The oil-in-water emulsified composition of the invention will now be explained in greater detail. According to the invention there is provided an oil-in-water emulsified composition comprising soybean-derived water-soluble polysaccharides as active ingredients, with an emulsified particle median diameter adjusted to 5-100 µm.

The soybean-derived water-soluble polysaccharides (hereinafter also referred to as soybean water-soluble polysaccharides) of the invention are obtained by heat extraction from soybean or processed soybean product at a temperature of higher than 100°C, and at a lower pH than the isoelectric point of soybean protein, preferably at an acidic pH of pH 2.4-4.0 and especially pH 3.0-3.5.

An oil-in-water emulsified composition according to the invention includes flavored seasonings including mayonnaise seasonings, Italian, Thousand Island, French, sesame or Caesar dressings, gravies, extracts and the like, as well as soups, flower pastes such as custard, and creams such as whipped cream, coffee cream and cooking cream.

As fats and oils in the oil phase of the oil-in-water emulsified composition there may be mentioned animal and vegetable fats and oils such as soybean oil, corn oil, cottonseed oil, coconut oil, palm oil, palm kernel oil, rapeseed oil, peanut oil, rice bran oil, cacao butter, milk fat, tallow, lard and butter, as well as processed fats and oils obtained by treatment thereof by hydrogenation, ester-exchange and fractionation. There are no particular restrictions on the amount of fat or oil in the emulsified composition, but a system with a large oil content, such as an emulsion with an oil content of 5% or greater in the emulsified composition, is particularly effective for exhibiting the flavor and body of the oils and fats.

The oil-in-water emulsified composition of the invention may be used in a wide pH range from weakly alkaline to acidic. As acidic substances which can adjust the pH value of the oil-in-water emulsified composition to the acidic range there may be used one or more from among organic acids such as lactic acid, citric acid, phosphoric acid, tartaric acid, ascorbic acid and acetic acid, or coffee, juice, jam or puree, acidic dairy products such as fermented milk, cheese or sour cream, and separately processed lactic acid bacterial fermentates.

An oil-in-water emulsified composition according to the invention is also salt-compatible, and can thus be used in combination with ordinary salts added to food products, including table salt, organic acid salts such as sodium citrate, sodium lactate and calcium lactate, and phosphoric acid salts such as sodium hexametaphosphate and sodium polyphosphate.

The invention may be carried out using soybean-derived water-soluble polysaccharides alone, but their use in combination with known emulsifiers can further increase the effect of improvement in the properties. As emulsifiers to be used in combination there may be mentioned one or more from among lecithin, enzyme-treated lecithin, fatty acid glycerin esters and their derivatives (glycerin fatty acid esters, acetic acid monoglycerides, lactic acid monoglycerides, citric acid monoglycerides, succinic acid monoglycerides, diacetyltartaric acid monoglycerides, polyglycerin fatty acid esters and the like), sorbitan fatty acid esters, propyleneglycol fatty acid esters and sucrose fatty acid esters (sugar esters).

The soybean-derived water-soluble polysaccharides may be used alone, and are preferably added in an amount of 0.02-20 wt%, more preferably 0.05-10 wt% and even more preferably 0.1-5 wt% with respect to the total amount of the oil-in-water emulsified composition. If the amount is too small the emulsified state will be unstable, whereas if it is too large, the viscosity will increase and impair the food texture. By also including various gum agents, proteins and thickeners, the effect can sometimes be more effectively exhibited.

As examples of existing gum agents there may be mentioned agar, carrageenan, furcerellan, tamarind seed polysaccharides, tara gum, karaya gum, pectin, xanthan gum, sodium alginate, tragacanth gum, guar gum, locust bean gum, pullulan, gelan gum, gum arabic and various starches. As proteins there may of course be mentioned vegetable proteins such as soybean protein, corn protein, wheat protein and pea protein, but also animal proteins such as casein, egg yolk and egg white albumin, whey protein, gelatin, actin, myosin and silk protein, as well as protein hydrolysates such as polypeptides, peptides and amino acids. In addition, examples of semi-synthetic thickeners include processed starches such as carboxymethyl cellulose (CMC), methyl cellulose (MC), hydroxyethyl cellulose (HEC), alginic acid propyleneglycol ester and soluble starches, and examples of synthetic thickeners include polyvinyl alcohol and sodium polyacrylate.

The oil-in-water emulsified composition of the invention may employ one or more of the aforementioned emulsifiers and stabilizers in combination for further improvement in the effect, in order to compensate for the drawbacks of any emulsifier or stabilizer used.

Stability can often be improved by addition to the aqueous phase of sugars such as sucrose, polyhydric alcohols such as glycerin, D-sorbitol and propylene glycol, or acidulants such as lactic acid, vinegar, citric acid or malic acid. There may also be included fading-resistant agents or preservatives, including L-ascorbic acid and its derivatives, aminocarbonyl reaction products, potassium sorbinate and the like.

The oil-in-water emulsified composition of the , invention may be produced by an ordinary emulsion production process known in the prior art. Specifically, the oil-soluble substance-containing oily phase and the water-soluble substance-containing aqueous phase may be prepared using an ordinary apparatus such as a colloid mill, high-pressure homogenizer or mixer.

Preferred modes of the invention will now be explained by examples, which are only illustrative and are not intended to limit the spirit of the invention. The parts and percentage values referred to throughout the examples are based on weight.

### Examples

### [Production Example 1] Preparation of water-soluble soybean polysaccharides

A two-fold amount of water was added to raw okara obtained from a separating soybean protein production process, the pH was adjusted to 3.0 with hydrochloric acid, and heat extraction was performed at 120°C for 1.5 hours. The pH of the cooled heat extraction slurry was 2.98. After adjusting the pH of the recovered slurry to 5.0, it was centrifuged (10,000 G x 30 min) and the supernatant and precipitate were separated. The separated precipitate portion was rinsed with an equivalent weight of water, centrifugation was performed, and the supernatant was combined with the previous supernatant prior to desalting treatment by electrodialysis, after which it was dried to obtain water-soluble soybean polysaccharides.

### [Example 1] Emulsion-type dressing

After dissolving 0.8 part of the water-soluble soybean polysaccharides prepared in Production Example 1, 3.3 parts of salt, 0.3 part of sodium glutamate and 3 parts of sugar in 39.6 parts of water, 18 parts of vinegar was added and the mixture was placed in a domestic mixer (Sanyo SM-58 Mixer). There was gradually added to the mixture 35 parts of purified canola oil and emulsification was performed to obtain a dressing. The median diameter of the emulsified particles of the dressing was measured to be as large as 20.0 µm with a laser diffraction particle distribution measuring device (SALD-2000A, by Shimadzu Seisakusho), while the flavor and body were satisfactory. Even after 3 months of cold storage, the emulsified particle median diameter was virtually unchanged at 22.3 µm, and was therefore stable.

### [Example 2] Mayonnaise dressing

After dissolving 1 part of the water-soluble soybean polysaccharides prepared in Production Example 1, 2.5 parts of salt and 0.5 part of sodium glutamate in 14 parts of water, 12.5 parts of vinegar was added and the mixture was placed in a domestic mixer (Sanyo SM-58 Mixer). There was gradually added to the mixture 70 parts of purified canola oil and emulsification was performed to obtain a mayonnaise dressing. The median diameter of the emulsified particles of the dressing was measured to be 5.2 µm with a laser diffraction particle distribution measuring device (SALD-2000A, by Shimadzu Seisakusho), while the flavor and body were satisfactory. Even after 3 months of cold storage, the emulsified particle median diameter was virtually unchanged at 7.0 µm, and was therefore stable, with no change in its condition.

### [Example 3] Custard cream

After powder mixing 1.5 parts of the water-soluble soybean polysaccharides prepared in Production Example 1, 13.5 parts of sugar and 5 parts of wheat flour, the mixture was added to a mixed solution of 62 parts of milk and 15 parts of egg yolk without allowing clumps to form, and this mixture was heated to dissolution in a water bath until creamy. Upon formation of the creamy state, 3 parts of butter was added and the mixture was further heated while vigorously stirring with a wooden spatula. After the heating and upon achieving a uniform viscosity, the mixture was removed from the flame, filtered with a strainer, poured into a flat pan, surface-covered with plastic wrap and allowed to cool. The median diameter of the emulsified particles of the custard cream was measured to be as large as 89.9 µm with a laser diffraction particle distribution measuring device (SALD-2000A, by Shimadzu Seisakusho), while a satisfactory butter flavor and body were exhibited. Cream bread prepared using the custard cream had a satisfactory creamy feel in the mouth, with a strong fresh butter-like flavor.

### [Example 4] Cream

After powder mixing 4.5 parts of the water-soluble soybean polysaccharides prepared in Production Example 1, 4.5 parts of skim milk powder and 0.05 part of sucrose fatty acid ester (product name: DK Ester F-160, by Daichi Kogyo Seiyaku Co., Ltd.), the mixture was dissolved in 51 parts of water and then heated to 67°C, and then 40 parts of hydrogenated rapeseed oil (containing 0.01 part of lecithin) and 2.3 parts of butter were added, a homomixer (TK Mixer, product of Tokushu Kika Co., Ltd.) was used for pre-emulsification for 15 minutes, and the emulsion was subjected to homogenization treatment with a high-pressure homogenizer at 70 kg/cm², 5 minutes of sterilization, followed again by homogenization treatment at 60 kg/cm², cooling to 5°C and aging overnight in a refrigerator, to obtain a cream with an emulsified particle median diameter of 9.6 µm as measured with a laser diffraction particle distribution measuring device (SALD-2000A, by Shimadzu Seisakusho).

### [Example 5] Whipped cream

Ten parts of granular sugar was added to 100 parts of the cream of Example 4. The mixture was whipped with a Kenwood mixer, and the optimum whipped state was achieved after 2 minutes and 30 seconds of whipping, to obtain whipped cream with a 140% overrun. The cream had a satisfactory flavor, a very good feel in the mouth and exhibited suitable shape retention without deformation at 15°C.

### [Example 6] Acid-resistant whipped cream

Next, 30 parts of cranberry puree, 10 parts of granular sugar and 3 parts of cherry brandy were added to 100 parts of cream obtained with the composition and method of Example 4 (emulsified particle median diameter: 9.6 µm). The mixture had a pH of 4.0, and upon whipping with a Kenwood mixer, produced an optimum foam condition at 1 minute and 49 seconds of whipping, thereby obtaining an acidic whipped cream with an overrun of 150%. The oil-in-water emulsified composition had a satisfactory flavor, and exhibited suitable shape retention without deformation at 15°C.

### [Example 7] Coffee cream

Ten parts of cream obtained with the composition and method of Example 4 (emulsified particle median diameter: 9.6 µm) was added to 100 parts of fresh-roasted regular coffee (90°C, pH 4.84). No signs of demulsification such as feathering were observed, and a mild, fresh-flavored coffee was obtained.

### [Example 8] Salt-compatible processed cream

Ten parts of cream obtained with the composition and method of Example 4 (emulsified particle median diameter: 9.6 µm) was added to 100 parts of commercially available meat sauce (Kagome, 1.5% salt content) and the mixture was cooked and intermingled with spaghetti. No demulsification such as coagulation or oil-offing was observed, and a spaghetti meat sauce with good body was obtained.

### [Example 9] Soup

After mixing 5 parts of the water-soluble soybean polysaccharides prepared in Production Example 1 with 26 parts of fermented concentrated soy sauce, 26 parts of beef extract, 3 parts of purified lard, 10 parts of flavoring oil, 3 parts of salt, 1.5 parts of sugar, 0.3 part of sodium glutamate, 10 parts of vegetable extract, 0.1 part of white pepper, 0.3 part of ground garlic, 5 parts of lemon juice and 9.8 parts of water, the mixture was heated to 67°C and treated for 15 minutes with a homomixer (TK Mixer, product of Tokushu Kika Co., Ltd.) at 8000 rpm to obtain a liquid seasoning. Verification of the particle size of the liquid seasoning with a microscope revealed a majority of emulsified particles with a particle size of about 10-100 µm, and no coalescence of the emulsified particles was observed. Next, 200 ml of hot water was added to 15 g of the obtained liquid seasoning to form a white soup, which exhibited a very satisfactory outer appearance and taste.

### [Example 10] Chinese fried rice

After mixing 2 parts of the water-soluble soybean polysaccharides prepared in Production Example 1 with 40 parts of sesame oil, 58 parts of water was gradually added while heating the mixture to 67°C, and treatment was carried out for 30 minutes with a homomixer (TK Mixer, product of Tokushu Kika Co., Ltd.) at 8000 rpm to obtain emulsified sesame oil with an emulsified particle median diameter of 11.3 µm. The obtained emulsified sesame oil was used to prepare Chinese fried rice, which exhibited a satisfactory sesame flavor with no greasiness, as a very delicious product.

### [Comparative Example 1] Emulsion-type dressing

A dressing was obtained in the same manner as Example 1 with the composition of Example 1, except that the water-soluble soybean polysaccharides were replaced with xanthan gum; however, the oil could not be adequately emulsified, thus not only preventing measurement of emulsified particles but also producing a greasy taste and a strong acidity.

### [Comparative Example 2] Coffee cream

A cream was obtained in the same manner as Example 4 with the composition of Example 4, except that instead of using water-soluble soybean polysaccharides, there were used 0.5 part of sucrose fatty acid ester (product name: DK Ester F-160, by Daichi Kogyo Seiyaku Co., Ltd.) and 0.1 part of lecithin. Measurement of the emulsified particle median diameter with a laser diffraction particle distribution measuring device (SALD-2000A, by Shimadzu Seisakusho) revealed a small size of 1.54 µm, while the flavor was indistinct and a satisfactory flavor was not obtained when the cream was added to regular coffee in the same manner as Example 6.

## Claims

1. An oil-in-water emulsified composition comprising soybean-derived water-soluble polysaccharides as active ingredients, with an emulsified particle median diameter adjusted to 5-100 µm.

2. An oil-in-water emulsified composition according to claim 1, wherein the soybean-derived water-soluble polysaccharides are obtainable by heat extraction from soybean or processed soybean product at a temperature of 100°C or higher and at a lower pH than the isoelectric point of soybean protein.

3. An oil-in-water emulsified composition according to claim 1 or 2, wherein the pH lower than the isoelectric point referred to in claim 2 is in an acidic range of pH 2.4-4.0.

4. An oil-in-water emulsified composition according to any one of claims 1 to 3, **characterized by** comprising edible fats and oils at 5% or greater.

## Patentansprüche

1. Eine emulgierte Öl-in-Wasser-Zusammensetzung umfassend von Sojabohnen stammende wasserlösliche Polysaccharide als wirksame Inhaltsstoffe mit einem auf durchschnittlich 5 bis 100 µm eingestellten emulgierten Partikeldurchmesser.

2. Eine emulgierte Öl-in-Wasser-Zusammensetzung nach Anspruch 1, wobei die wasserlöslichen, von Sojabohnen stammenden Polysaccharide erhältlich sind durch Wärmeextraktion aus Sojabohnen oder bearbeiteten Sojabohnenprodukten bei einer Temperatur von 100 °C oder höher und bei einem geringeren pH als der isoelektrische Punkt des Sojabohnenproteins.

3. Eine emulgierte Öl-in-Wasser-Zusammensetzung nach einem der Ansprüche 1 oder 2, wobei der pH-Wert kleiner als der isoelektrische Punkt, auf den im Anspruch 2 Bezug genommen ist, in einem sauren pH-Bereich von 2,4 bis 4,0 liegt.

4. Eine emulgierte Öl-in-Wasser-Zusammensetzung nach einem der Ansprüche 1 bis 3, **dadurch gekennzeichnet, dass** sie essbare Fette und Öle mit 5 % oder größer umfasst.

## Revendications

1. Composition de type huile-dans-l'eau émulsifiée comprenant des polysaccharides hydrosolubles dérivant du soja en tant qu'ingrédients actifs, avec un diamètre moyen de la particule émulsifiée ajusté à 5-100 µm.

2. Composition de type huile-dans-l'eau émulsifiée selon la revendication 1, où les polysaccharides hydrosolubles dérivant du soja peuvent être obtenus par extraction thermique à partir du soja ou du produit transformé de soja à une température de 100°C ou plus et à un pH inférieur au point isoélectrique de la protéine de soja.

3. Composition de type huile-dans-l'eau émulsifiée selon la revendication 1 ou 2, où le pH inférieur au point isoélectrique indiqué dans la revendication 2 se situe dans le domaine du pH acide de 2,4 à 4,0.

4. Composition de type huile-dans-l'eau émulsifiée selon l'une quelconque des revendications 1 à 3, **caractérisée en ce qu'**elle comprend des graisses et huiles comestibles à raison de 5 % ou plus.
